# EUROPEAN PATENT APPLICATION

(11) **EP 3 733 628 A1**
(43) Date of publication of application: **04.11.2020**
(21) Application number: 19305544.9
(22) Date of filing: 29.04.2019
(51) Int. Cl.: C04B 28/06

(54) **AUTOCLAVED CEMENT COMPOSITIONS**

(71) Applicant: IMERTECH SAS, 75015 Paris (FR)
(72) Inventor: The designation of the inventor has not yet been filed
(74) Representative: Haseltine Lake Kempner LLP

(57) **Abstract**

The use of calcium aluminate cement in autoclaved cement products, cementitious compositions suitable for forming the autoclaved cement products, and methods for making the cementitious compositions and autoclaved cement products.

## Description

### TECHNICAL FIELD

The present invention relates to cementitious compositions comprising a calcium aluminate cement that are suitable for making autoclaved cement products such as fibre cement boards and autoclaved aerated concrete (AAC). The present invention additionally relates to methods for making autoclaved cement products and the autoclaved cement products obtained by and/or obtainable by said methods. The present invention further relates to the use of a calcium aluminate cement and/or the cementitious compositions described herein to make autoclaved cement products.

### BACKGROUND

Cementitious compositions may be autoclaved in order to harden the composition and improve certain mechanical properties. Examples of autoclaved cement products include fibre cement board and autoclaved aerated concrete (AAC). Portland cement is typically used as the cement in cementitious compositions. Lime can also be used to react with silica during autoclaving. However, both Portland cement and lime react very rapidly with water so it is generally necessary to include a retardant in the cementitious compositions. It is therefore desirable to provide alternative or improved cementitious compositions suitable for making autoclaved products, for example that may provide alternative or improved autoclaved cement products and/or that may reduce the rate at which the cementitious composition reacts with water.

### SUMMARY

In accordance with a first aspect of the present invention there is provided a cementitious composition comprising:
from about 0.25 wt% to less than about 50 wt% of a calcium aluminate cement;
from about 20 wt% to about 60 wt% of one or more other hydraulic binders.

In an embodiment of the first aspect of the present invention the cementitious composition may further comprise:
from about 0 wt% to about 80 wt% of one or more granular materials; and/or
from about 0 wt% to about 15 wt% of one or more reinforcing fibres; and/or
from about 0 wt% to about 2 wt% of one or more blowing agents; and/or
from about 0 wt% to about 10 wt% of one or more tobermorite modifiers.

In accordance with a second aspect of the present invention there is provided a method for making an autoclaved cement product, the method comprising autoclaving a cementitious composition according to the first aspect of the present invention, including any embodiment thereof. In certain embodiments, the autoclaved cement product is a fibre cement board or an autoclaved aerated concrete (AAC).

In accordance with a third aspect of the present invention there is provided an autoclaved cement product obtained by and/or obtainable by the method of the second aspect of the present invention, including any embodiment thereof.

In accordance with a fourth aspect of the present invention there is provided a use of a calcium aluminate cement to make an autoclaved cement product. In certain embodiments, the cementitious composition according to the first aspect of the present invention, including any embodiment thereof, is used to make the autoclaved cement product.

In accordance with a fifth aspect of the present invention there is provided a method for making a cementitious composition according to the first aspect of the present invention.

Certain embodiments of any aspect of the present invention may provide one or more of the following advantages:
- increased toughness;
- improved wet and dry dimensional stability;
- improved carbonation resistance;
- improved water intake;
- good workability;
- improved thermal resistance;
- reduced fibres incorporated;
- low reactivity at room temperature;
- good reactivity in autoclave;
- reduced environmental footprint.

The details, examples and preferences provided in relation to any particular one or more of the stated aspects of the present invention will be further described herein and apply equally to all aspects of the present invention. Any combination of the embodiments, examples and preferences described herein in all possible variations thereof is encompassed by the present invention unless otherwise indicated herein, or otherwise clearly contradicted by context.

### DETAILED DESCRIPTION

The present invention is based on the surprising finding that using a calcium aluminate cement to make autoclaved cement products provides a number of advantages. For example, the calcium aluminate cement provides a product with a useful reactivity at both room temperature and autoclave temperature. Namely, the calcium aluminate cement provides a reactivity that is not so fast that retardants need to be added to provide sufficient time to work the composition before it sets, but not so slow that the process is uneconomical. This enables the compositions used to make the autoclaved cement products to have good workability at room temperature before they are autoclaved. Further, the autoclaved cement products are provided with advantageous properties such as, for example, improved mechanical strength, toughness, wet and dry dimensional stability, resistance to carbonation, and/or water uptake.

The calcium aluminate cement may be incorporated into a cementitious composition that is suitable for making an autoclaved cement product. As used herein, the term "cementitious composition" refers to a composition that includes one or more cements.

The cementitious composition may further comprise one or more hydraulic binders (other than the calcium aluminate cement), one or more granular materials, one or more reinforcing fibres, one or more blowing agents, one or more tobermorite modifiers, or a combination thereof. The cementitious composition may, for example, comprise at least one of one or more granular materials and one or more reinforcing fibres. For example, a fibre cement board may comprise one or more reinforcing fibres. For example, an autoclaved aerated cement may comprise one or more granular materials. The cementitious composition may, for example, be a dry composition (comprises less than about 5 wt% moisture, for example less than about 4 wt% or less than about 3 wt% or less than about 2 wt% or less than about 1 wt% or less than about 0.5 wt% moisture, for example about 0 wt% moisture). Moisture content is measured by heating the composition to evaporate the moisture until its mass does not change and calculating the difference in mass before and after heating.

### Calcium Aluminate Cement

The calcium aluminate cement is present in the cementitious composition in an amount from about 0.25 wt% to less than about 50 wt% based on the total dry weight of the cementitious composition. The total dry weight of the cementitious composition refers to the total weight of all the materials present in the cementitious composition except water. For example, the calcium aluminate cement may be present in the cementitious composition in an amount equal to or greater than about 0.5 wt% or equal to or greater than about 1 wt% or equal to or greater than about 1.5 wt% or equal to or greater than about 2 wt% or equal to or greater than about 2.5 wt% or equal to or greater than about 3 wt% or equal to or greater than about 3.5 wt% or equal to or greater than about 4 wt%, based on the total dry weight of the cementitious composition. For example, the calcium aluminate cement may be present in the cementitious composition in an amount equal to or less than about 45 wt% or equal to or less than about 40 wt% or equal to or less than about 35 wt% or equal to or less than about 30 wt% or equal to or less than about 25 wt% or equal to or less than about 20 wt% or equal to or less than about 15 wt% or equal to or less than about 10 wt% or equal to or less than about 9 wt% or equal to or less than about 8 wt% or equal to or less than about 7 wt% or equal to or less than about 6.5 wt% or equal to or less than about 6 wt% or equal to or less than about 5.5 wt% or equal to or less than about 5 wt%, based on the total dry weight of the cementitious composition. For example, the calcium aluminate cement may be present in the cementitious composition in an amount ranging from about 0.25 wt% to about 40 wt% or from about 0.25 wt% to about 20 wt% or from about 0.25 wt% to about 10 wt% or from about 0.25 wt% to about 8 wt% or from about 0.25 wt% to about 6 wt% or from about 0.25 wt% to about 5 wt% or from about 0.5 wt% to about 40 wt% or from about 0.5 wt% to about 20 wt% or from about 0.5 wt% to about 10 wt% or from about 0.5 wt% to about 8 wt% or from about 0.5 wt% to about 6 wt% or from about 0.5 wt% to about 5 wt% or from about 1 wt% to about 40 wt% or from about 1 wt% to about 20 wt% or from about 1.5 wt% to about 10 wt% or from about 1.5 wt% to about 8 wt% or from about 2 wt% to about 6 wt% or from about 2 wt% to about 5 wt%, based on the total dry weight of the cementitious composition. For example, the calcium aluminate cement may be present in the cementitious composition in an amount ranging from about 0.25 wt% to about 20 wt% or from about 0.5 wt% to about 10 wt% or from about 1 wt% to about 8 wt%, based on the total dry weight of the cementitious composition.

The term "calcium aluminate cement" refers to a composition comprising CₙAₓ wherein C is CaO, A is Al₂O₃, n is an integer from 1 to 12 and x is an integer from 1 to 24.

In certain embodiments, the calcium aluminate cement comprises CA₂ wherein C is CaO and A is Al₂O₃. In certain embodiments, the calcium aluminate cement comprises C₂AS wherein C is CaO, A is Al₂O₃, and S is SiO₂. In certain embodiments, the calcium aluminate cement comprises both CA₂ and C₂AS.

In certain embodiments, the calcium aluminate cement comprises equal to or greater than about 10 wt% of CA₂ based on the total dry weight of the calcium aluminate cement. For example, the calcium aluminate cement may comprise equal to or greater than about 20 wt% or equal to or greater than about 30 wt% or equal to or greater than about 40 wt% or equal to or greater than about 45 wt% or equal to or greater than about 50 wt% of CA₂ based on the total dry weight of the calcium aluminate cement. For example, the calcium aluminate cement may comprise equal to or less than about 70 wt% or equal to or less than about 65 wt% or equal to or less than about 60 wt% of CA₂ based on the total dry weight of the calcium aluminate cement. For example, the calcium aluminate cement may comprise from about 10 wt% to about 70 wt% or from about 20 wt% to about 70 wt% or from about 30 wt% to about 70 wt% or from about 40 wt% to about 70 wt% or from about 50 wt% to about 60 wt% of CA₂ based on the total dry weight of the calcium aluminate cement.

In certain embodiments, the calcium aluminate cement comprises equal to or greater than about 15 wt% of C₂AS based on the total dry weight of the calcium aluminate cement. For example, the calcium aluminate cement may comprise equal to or greater than about 20 wt% or equal to or greater than about 25 wt% of C₂AS based on the total dry weight of the calcium aluminate cement. For example, the calcium aluminate cement may comprise equal to or less than about 45 wt% or equal to or less than about 40 wt% or equal to or less than about 35 wt% or equal to or less than about 30 wt% of C₂AS based on the total dry weight of the calcium aluminate cement. For example, the calcium aluminate cement may comprise from about 0 wt% to about 45 wt% or from about 5 wt% to about 45 wt% or from about 15 wt% to about 45 wt% or from about 20 wt% to about 35 wt% or from about 26 wt% to about 32 wt% of C₂AS based on the total dry weight of the calcium aluminate cement. For example, the calcium aluminate cement may comprise from about 15 wt% to about 45 wt% or from about 20 wt% to about 35 wt% of C₂AS based on the total dry weight of the calcium aluminate cement.

In certain embodiments, the calcium aluminate cement comprises equal to or greater than about 80 wt% total CA₂ and C₂AS based on the total dry weight of the calcium aluminate cement. For example, the calcium aluminate cement may comprise equal to or greater than about 85 wt% or equal to or greater than about 90 wt% or equal to or greater than about 95 wt% total CA₂ and C₂AS based on the total dry weight of the calcium aluminate cement. For example, the calcium aluminate cement may comprise up to 100 wt% total CA₂ and C₂AS based on the total dry weight of the calcium aluminate cement. For example, the calcium aluminate cement may comprise equal to or less than about 99 wt% or equal to or less than about 98 wt% or equal to or less than about 95 wt% total CA₂ and C₂AS based on the total dry weight of the calcium aluminate cement. For example, the calcium aluminate cement may comprise from about 80 wt% to about 100 wt% or from about 85 wt% to about 98 wt% or from about 90 wt% to about 95 wt% total CA₂ and C₂AS based on the total dry weight of the calcium aluminate cement.

The total amount of CₙAₓ other than CA₂ and C₂AS in the calcium aluminate cement may, for example, be equal to or less than about 20 wt% based on the total dry weight of the calcium aluminate cement. For example, the total amount of CₙAₓ other than CA₂ and C₂AS in the calcium aluminate cement may be equal to or less than about 15 wt% or equal to or less than about 10 wt% or equal to or less than about 5 wt% or equal to or less than about 2 wt% or equal to or less than about 1 wt% based on the total dry weight of the calcium aluminate cement. For example, the total amount of CₙAₓ other than CA₂ and C₂AS in the calcium aluminate cement may be equal to or greater than about 0.5 wt% or equal to or greater than about 1 wt% or equal to or greater than about 2 wt% or equal to or greater than about 5 wt% or equal to or greater than about 10 wt% based on the total dry weight of the calcium aluminate cement. For example, the total amount of CₙAₓ other than CA₂ and C₂AS in the calcium aluminate cement may range from about 0.5 wt% to about 20 wt% or from about 1 wt% to about 15 wt% or from about 2 wt% to about 10 wt% based on the total dry weight of the calcium aluminate cement.

The calcium aluminate cement may, for example, further comprise one or more of C, CA, CA₆, C₃A, C₄A₃$, C₁₂A₇, CAS₂, CS, C₂S, C₃S, C₃S₂, A₃S₂, C₄AF, and C₂A_{1-y}F_{y}, wherein C is CaO, A is Al₂O₃, S is SiO₂, $ is SO₃, F is Fe₂O₃, and y is 0 to 1, for example 0 to 0.7. For example, the calcium aluminate cement may further comprise one or more of CA, CA₆ and C₄A₃$, for example all of CA, CA₆ and C₄A₃$. For example, the calcium aluminate cement may further comprise one or more of C, C₃A, C₁₂A₇, CA, CA₆ and C₄A₃$, for example all of C, C₃A, C₁₂A₇, CA, CA₆ and C4A₃$.

The calcium aluminate cement may, for example, comprise equal to or greater than about 0.5 wt% CA based on the total dry weight of the calcium aluminate cement. For example, the calcium aluminate cement may comprise equal to or greater than about 1 wt% or equal to or greater than about 1.5 wt% or equal to or greater than about 2 wt% or equal to or greater than about 2.5 wt% of CA based on the total dry weight of the calcium aluminate cement. For example, the calcium aluminate cement may comprise equal to or less than about 6 wt% or equal to or less than about 5.5 wt% or equal to or less than about 5 wt% or equal to or less than about 4.5 wt% or equal to or less than about 4 wt% or equal to or less than about 3.5 wt% of CA based on the total dry weight of the calcium aluminate cement. For example, the calcium aluminate cement may comprise from about 0.5 wt% to about 6 wt% or from about 1.5 wt% to about 4.5 wt% or from about 2.5 wt% to about 3.5 wt% of CA based on the total dry weight of the calcium aluminate cement.

The calcium aluminate cement may, for example, comprise equal to or greater than about 0.25 wt% of CA₆ based on the total dry weight of the calcium aluminate cement. For example, the calcium aluminate cement may comprise equal to or greater than about 0.5 wt% or equal to or greater than about 1 wt% or equal to or greater than about 2 wt% or equal to or greater than about 5 wt% of CA₆ based on the total dry weight of the calcium aluminate cement. For example, the calcium aluminate cement may comprise equal to or less than about 15 wt% or equal to or less than about 10 wt% or equal to or less than about 5 wt% of CA₆ based on the total dry weight of the calcium aluminate cement. For example, the calcium aluminate cement may comprise from about 0.25 wt% to about 15 wt% or from about 0.5 wt% to about 10 wt% or from about 1 wt% to about 15 wt% of CA₆ based on the total dry weight of the calcium aluminate cement.

The total amount of CA and CA₆ in the calcium aluminate cement may, for example, be equal to or less than about 20 wt% based on the total dry weight of the calcium aluminate cement. For example, the total amount of CA and CA₆ in the calcium aluminate cement may, for example, be equal to or less than about 15 wt% or equal to or less than about 10 wt% or equal to or less than about 5 wt% based on the total dry weight of the calcium aluminate cement. For example, the total amount of CA and CA₆ in the calcium aluminate cement may, for example, be equal to or greater than about 0.5 wt% or equal to or greater than about 1 wt% or equal to or greater than about 2 wt% based on the total dry weight of the calcium aluminate cement. For example, the total amount of CA and CA₆ in the calcium aluminate cement may, for example, be from 0 wt% to about 20 wt% or from about 0.5 wt% to about 15 wt% or from about 1 wt% to about 10 wt% based on the total dry weight of the calcium aluminate cement.

The calcium aluminate cement may, for example, comprise equal to or greater than about 5 wt% of C₄AF based on the total dry weight of the calcium aluminate cement. For example, the calcium aluminate cement may comprise equal to or greater than about 10 wt% of C₄AF based on the total dry weight of the calcium aluminate cement. The calcium aluminate cement may, for example, comprise equal to or less than about 20 wt% or equal to or less than about 15 wt% of C₄AF based on the total dry weight of the calcium aluminate cement. For example, the calcium aluminate cement may comprise from about 5 wt% to about 20 wt% or from about 10 wt% to about 15 wt% of C₄AF based on the total dry weight of the calcium aluminate cement.

The calcium aluminate cement may, for example, comprise equal to or greater than about 0.5 wt% of C₄A₃$ based on the total dry weight of the calcium aluminate cement. For example, the calcium aluminate cement may comprise equal to or greater than about 1 wt% or equal to or greater than about 2 wt% or equal to or greater than about 5 wt% of C₄A₃$ based on the total dry weight of the calcium aluminate cement. For example, the calcium aluminate cement may comprise equal to or less than about 20 wt% or equal to or less than about 15 wt% or equal to or less than about 10 wt% of C₄A₃$ based on the total dry weight of the calcium aluminate cement. For example, the calcium aluminate cement may comprise from about 0.5 wt% to about 20 wt% or from about 0.5 wt% to about 15 wt% or from about 1 wt% to about 10 wt% or from about 0.5 wt% to about 12 wt% of C₄A₃$ based on the total dry weight of the calcium aluminate cement.

The total amount of C₁₂A7 and CA and C₄A₃$ in the calcium aluminate cement may, for example, be equal to or less than about 10 wt% based on the total dry weight of the calcium aluminate cement. For example, the total amount of C₁₂A7 and CA and C₄A₃$ in the calcium aluminate cement may, for example, be equal to or less than about 8 wt% or equal to or less than about 6 wt% or equal to or less than about 5 wt% based on the total dry weight of the calcium aluminate cement. For example, the total amount of C₁₂A7 and CA and C₄A₃$ in the calcium aluminate cement may, for example, be equal to or greater than about 0.5 wt% or equal to or greater than about 1 wt% or equal to or greater than about 2 wt% or equal to or greater than about 3 wt% based on the total dry weight of the calcium aluminate cement. For example, the total amount of C₁₂A7 and CA and C₄A₃$ in the calcium aluminate cement may, for example, range from about 0.5 wt% to about 10 wt% or from about 1 wt% to about 8 wt% based on the total dry weight of the calcium aluminate cement.

The total amount of C, C₃A, C₁₂A₇, CA and C₄A₃$ in the calcium aluminate cement may, for example, be equal to or less than about 10 wt% based on the total dry weight of the calcium aluminate cement. For example, the total amount of C, C₃A, C₁₂A₇, CA and C₄A₃$ in the calcium aluminate cement may, for example, be equal to or less than about 8 wt% or equal to or less than about 6 wt% or equal to or less than about 5 wt% based on the total dry weight of the calcium aluminate cement. For example, the total amount of C, C₃A, C₁₂A₇, CA and C₄A₃$ in the calcium aluminate cement may, for example, be equal to or greater than about 0.5 wt% or equal to or greater than about 1 wt% or equal to or greater than about 2 wt% or equal to or greater than about 3 wt% based on the total dry weight of the calcium aluminate cement. For example, the total amount of C, C₃A, C₁₂A₇, CA and C₄A₃$ in the calcium aluminate cement may, for example, range from about 0.5 wt% to about 10 wt% or from about 1 wt% to about 8 wt% based on the total dry weight of the calcium aluminate cement.

The calcium aluminate cement may, for example, further comprise one or more of Fe₂O₃, TiO₂ SO₃, and MgO. The calcium aluminate cement may, for example, comprise from 0 wt% to about 5 wt% of each of Fe₂O₃, TiO₂ SO₃, and MgO, for example from about 0 wt% to about 3 wt% or from about 0.5 wt% to about 2 wt% of each of Fe₂O₃, TiO₂ SO₃, and MgO, based on the total dry weight of the calcium aluminate cement.

The calcium aluminate cement may, for example, further comprise one or more alkali metal oxides (R₂O wherein R is an alkali metal such as Na₂O and K₂O). The calcium aluminate cement may, for example, comprise from 0 wt% to about 2 wt% of each alkali metal oxide. For example, the calcium aluminate cement may comprise from about 0.5 wt% to about 1.5 wt% or from about 0.5 wt% to about 1 wt% of each alkali metal oxide.

The Fe₂O₃, TiO₂, SO₃, MgO and alkaline compounds present in the calcium aluminate cement are impurities that generally come from the raw materials used for the manufacture of calcium aluminate.

The calcium aluminate cement may, for example, comprise from about 40 wt% to about 70 wt% of CA₂, and from about 10 wt% to about 40 wt% of C₂AS based on the total dry weight of the calcium aluminate cement.

The calcium aluminate cement may, for example, comprise from about 40 wt% to about 70 wt% of CA₂, from about 10 wt% to about 40 wt% of C₂AS, from about 0.5 wt% to about 10 wt% of CA, and from about 0 wt% to about 5 wt% of C₄AF, based on the total dry weight of the calcium aluminate cement.

The calcium aluminate cement may, for example, comprise from about 40 wt% to about 60 wt% of CA₂ and from about 15 wt% to about 40 wt% of C₂AS based on the total dry weight of the calcium aluminate cement.

The calcium aluminate cement may, for example, comprise from about 40 wt% to about 60 wt% of CA₂, from about 15 wt% to about 40 wt% of C₂AS, from about 0.5 wt% to about 10 wt% of CA, and from about 0 wt% to about 5 wt% of C₄AF, based on the total dry weight of the calcium aluminate cement.

The calcium aluminate cement may, for example, comprise from about 50 wt% to about 60 wt% of CA₂ and from about 25 wt% to about 35 wt% of C₂AS based on the total dry weight of the calcium aluminate cement.

The calcium aluminate cement may, for example, comprise from about 50 wt% to about 60 wt% of CA₂, from about 25 wt% to about 35 wt% of C₂AS, from about 0.5 wt% to about 5 wt% of CA, from about 0 wt% to about 2 wt% of C₄AF, based on the total dry weight of the calcium aluminate cement.

The calcium aluminate cement may, for example, comprise from about 50 wt% to about 60 wt% of CA₂, from about 25 wt% to about 35 wt% of C₂AS, from about 0.5 wt% to about 5 wt% of CA, from about 0 wt% to about 2 wt% of C₄AF, and from about 5 wt% to about 20 wt% of additional crystallized phases (including, for example from about 2 wt% to about 6 wt% of C₄A₃$) based on the total dry weight of the calcium aluminate cement.

The calcium aluminate cement may, for example, comprise about 55 wt% of CA₂, about 29 wt% of C₂AS, about 3 wt% of CA, about 1 wt% of C₄AF, and about 12 wt% of additional crysallized phases (including, for example about 4 wt% of C₄A₃$) based on the total dry weight of the calcium aluminate cement.

The amount of each crystalline phase in the calcium aluminate cement may be determined by quantitative X-ray diffraction such as the Rietveld method.

The calcium aluminate cement may, for example, comprise an amorphous phase. The amount of the amorphous phase in the calcium aluminate cement may, for example, be equal to or less than about 60 wt%, for example equal to or less than about 55 wt% or equal to or less than about 50 wt% or equal to or less than about 45 wt% or equal to or less than about 35 wt% or equal to or less than about 30 wt% or equal to or less than about 25 wt% or equal to or less than about 20 wt% or equal to or less than about 15 wt% or equal to or less than about 10 wt% or equal to or less than about 5 wt%. For example, the amount of the amorphous phase in the calcium aluminate cement may be equal to or greater than about 1 wt% or equal to or greater than about 2 wt% or equal to or greater than about 5 wt%, based on the total dry weight of the calcium aluminate cement. For example, the calcium aluminate may comprise from about 1 wt% to about 60 wt% or from about 1 wt% to about 40 wt% or from about 1 wt% to about 20 wt% or from about 2 wt% to about 10 wt% of an amorphous phase based on the total dry weight of the calcium aluminate cement.

The calcium aluminate cement may, for example, be in the form of a powder. As used herein, the term "powder" refers to a particulate material wherein at least about 98% of the particles have a size in the range of from about 2 µm to about 170 µm, as measured by laser diffraction analysis, for example using a Microtrac X100 particle size analyser. The powder may, for example, have a Blaine specific surface area measured according to standard NF-EN-196-6 ranging between 2200 cm²/g and 4500 cm²/g, for example between 2900 cm²/g and 3900 cm²/g.

The calcium aluminate cement may, for example, be made by mixing calcium oxide and aluminium oxide and sintering the mixture. The calcium oxide and aluminium oxide may, for example, be co-ground, for example using a ball mill or any other mill known to those skilled in the art. The co-ground material may subsequently be granulated with water (to aggregate the particles in the co-ground material). Sintering may, for example, occur at a temperature equal to or greater than about 1000°C, for example equal to or greater than about 1400°C for a period of time ranging from about 2 hours to about 10 hours. After sintering, the formed calcium aluminate may be further ground to form a desired particle size distribution.

The calcium oxide and aluminium oxide may be obtained from any suitable source, including, for example, clays and by-products. The calcium oxide may, for example, be comprised in limestone. The calcium oxide may, for example, be substantially pure calcium oxide (i.e. calcium oxide that comprises equal to or less than about 5 wt% impurities, for example equal to or less than about 3 wt% impurities, equal to or less than about 2 wt% impurities, or equal to or less than about 1 wt% impurities). The aluminium oxide may, for example, be comprised in bauxite. The aluminium oxide may, for example, be substantially pure aluminium oxide (i.e. aluminium oxide that comprises equal to or less than about 5 wt% impurities, for example equal to or less than about 3 wt% impurities, equal to or less than about 2 wt% impurities, or equal to or less than about 1 wt% impurities). The calcium oxide may, for example, be a combination of limestone and substantially pure calcium oxide. The aluminium oxide may, for example, be a combination of bauxite and substantially pure aluminium oxide. The calcium oxide may, for example, be limestone and the aluminium oxide may, for example, be substantially pure aluminium oxide. The calcium oxide may, for example, be substantially pure calcium oxide and the aluminium oxide may, for example, be bauxite. The amount of a certain CₙAₓ in the composition may, for example, be adjusted by using substantially pure calcium oxide and/or aluminium oxide in comparison to bauxite and/or limestone. The amount of impurities (e.g. metal oxides such as silica, iron oxide, titanium dioxide, and R₂O) in the composition may, for example, be decreased by using substantially pure calcium oxide and/or aluminium oxide in comparison to bauxite and/or limestone.

### Additional Hydraulic Binder

The cementitious composition may, for example, comprise one or more additional hydraulic binders (other than the calcium aluminate cement). As used herein, the term "hydraulic binder" refers to a material that reacts with water to make an adhesive composition that can harden to adhere other materials together. The term "hydraulic binder" also includes pozzolanic materials, which chemically react with water and calcium hydroxide at room temperature to form an adhesive composition that can set or harden to adhere other materials together.

The other hydraulic binders used in the cementitious compositions described herein may, for example, include lime and/or calcium silicate (2CaO.SiO₂).

The other hydraulic binders may, for example, be selected from Portland cement, lime (including, for example, slaked lime), fly ash, pozzolanic ash, blast furnace slag, silica flour, silica fume, metakaolin, basalt, or a combination thereof. For example, the other hydraulic binders may be selected from Portland cement, lime, calcium silicate, or a combination thereof. For example, the other hydraulic binders may be selected from Portland cement, lime, or a combination thereof.

The total amount of other hydraulic binders in the cementitious composition may, for example, range from about 20 wt% to about 60 wt% based on the total dry weight of the cementitious composition. For example, the total amount of other hydraulic binders in the cementitious composition may range from about 30 wt% to about 50 wt% or from about 35 wt% to about 45 wt% based on the total dry weight of the cementitious composition. The specified ranges refer to the total amount of the one or more other hydraulic binders.

The total amount of Portland cement in the cementitious composition may, for example, range from about 0 wt% to about 45 wt%, for example from about 20 wt% to about 45 wt% or from about 30 wt% to about 45 wt% based on the total dry weight of the cementitious composition.

The total amount of lime in the cementitious composition may, for example, range from about 0 wt% to about 30 wt%, for example from about 10 wt% to about 30 wt% or from about 20 wt% to about 30 wt% based on the total dry weight of the cementitious composition.

The amount of lime in the cementitious composition may range from about 0 to about 30 wt% and the amount of Portland cement in the cementitious composition may range from about 0 to about 45 wt%, based on the total dry weight of the cementitious composition.

### Granular Materials

The cementitious composition may, for example, comprise one or more granular materials. The term "granular materials" used herein refers to a non-binder material made up of granules (particles or aggregates of particles), wherein at least about 98 % of the granules have a particle size less than about 5 mm, as measured by sieving.

The granular materials may, for example, be selected from quartz, sand, limestone, gypsum, siliceous sand, or a combination thereof.

The total amount of granular materials in the cementitious composition may, for example, range from about 0 wt% to about 80 wt% based on the total dry weight of the cementitious composition. For example, the total amount of granular materials in the cementitious composition may range from about 0.5 wt% to about 80 wt% or from about 1 wt% to about 80 wt% or from about 5 wt% to about 80 wt% or from about 10 wt% to about 80 wt% or from about 15 wt% to about 80 wt% or from about 20 wt% to about 70 wt% or from about 25 wt% to about 70 wt% or from about 30 wt% to about 70 wt% or from about 40 wt% to about 70 wt% or from about 50 wt% to about 70 wt% based on the total dry weight of the cementitious composition. For example, the total amount of the one or more granular materials in the cementitious composition may range from about 15 wt% to about 80 wt% or from about 25 wt% to about 70 wt% or from about 40 wt% to about 70 wt% based on the total dry weight of the cementitious composition.

The total amount of siliceous sand in the cementitious composition may, for example, range from about 25 wt% to about 70 wt% or from about 30 wt% to about 70 wt% or from about 40 wt% to about 70 wt% or from about 50 wt% to about 70 wt% based on the total dry weight of the cementitious composition.

### Reinforcing Fibres

The cementitious composition may, for example, comprise one or more reinforcing fibres. The term "reinforcing fibres" used herein refers to a fibre that improves the structural integrity of a material compared to the same material without the reinforcing fibres.

The reinforcing fibres may, for example, be natural fibres, synthetic fibes, or a combination thereof. The reinforcing fibres may, for example, be selected from cellulose fibres, cellulose pulp, glass fibres, carbon fibres, polymeric fibres, or a combination thereof. The polymeric fibres may be selected from polyvinylacetate fibres, polyethylene fibres, polyvinylalcohol fibres, or a combination thereof

The total amount of reinforcing fibres in the cementitious composition may, for example, range from about 0 wt% to about 15 wt% based on the total dry weight of the cementitious composition. For example, the total amount of reinforcing fibres in the cementitious composition may be 0 wt%. For example, the total amount of reinforcing fibres in AAC or in a cementitious composition to be used to make AAC may be 0 wt%. For example, the total amount of reinforcing fibres in fibre cement board or in a cementitious composition to be used to make fibre cement board may be at least about 0.5 wt% or at least about 1 wt%. For example, the total amount of reinforcing fibres in the cementitious composition (e.g. cementitious composition to be used to make fibre cement board) may range from about 0.5 wt% to about 15 wt% or from about 1 wt% to about 12 wt% or from about 1 wt% to about 10 wt% or from about 2 wt% to about 8 wt% based on the total dry weight of the cementitious composition.

### Blowing Agents

The cementitious composition may, for example, comprise one or more blowing agents. The term "blowing agent" used herein refers to a pore-forming agent or a material that undergoes a chemical reaction in the composition to form air bubbles that are incorporated into the product.

The blowing agent may, for example, be aluminium powder.

The total amount of blowing agents in the cementitious composition may, for example, range from about 0 wt% to about 2 wt% based on the total dry weight of the cementitious composition. For example, the total amount of blowing agents in the cementitious composition may be 0 wt%. For example, the total amount of blowing agents in a cement fibre board or a cementitious composition to be used to make a fibre cement board may be 0 wt%. For example, the total amount of blowing agents in an autoclaved aerated concrete (AAC) or a cementitious composition to be used to make an autoclaved aerated concrete (AACT) may be at least about 0.01 wt% or at least about 0.05 wt% or at least about 0.1 wt%. For example, the total amount of blowing agents in the cementitious composition (e.g. cementitious composition to be used to make an autoclaved aerated concrete (AAC)) may range from about 0.01 wt% to about 1.5 wt% or from about 0.01 wt% to about 1 wt% or from about 0.02 wt% to about 0.6 wt% or from about 0.04 wt% to about 0.5 wt% based on the total dry weight of the cementitious composition.

### Tobermorite Modifier

The cementitious composition may, for example, comprise one or more tobermorite modifiers. The term "tobermorite modifier" refers to a compound that promotes the formation of tobermorite or modifies the chemical composition of the tobermorite.

The cementitious composition may, for example, comprise from about 0 wt% to about 10 wt% total tobermorite modifiers based on the total dry weight of the cementitious composition. For example, the cementitious composition may comprise 0 wt% tobermorite modifiers. For example, an aerated autoclaved cement (AAC) or a cementitious composition to be used to make an AAC may comprise 0 wt% tobermorite modifiers. For example, a fibre cement board or a cementitious composition to be used to make a fibre cement board may comprise at least about 0.5 wt% or at least about 1 wt% total tobermorite modifiers. For example, the cementitious composition may comprise from about 0.5 wt% to about 10 wt% or from about 1 wt% to about 10 wt% or from about 1.5 wt% to about 8 wt% or from about 2 wt% to about 6 wt% total tobermorite modifiers.

The cementitious composition may, for example, comprise one or more tobermorite modifiers if an aluminium source and/or a sulphate source is added to the cementitious composition.

### Other Optional Additives

The cementitious composition may, for example, comprise one or more further optional additives. For examples, the cementitious composition may comprise one or more further optional additives which affect the pH of the composition, one or more dispersing agents, one or more antioxidants, one or more viscosity modifiers, one or more hardeners, one or more accelerators, one or more retardants, one or more surfactants, one or more cross-linking agents, one or more thickening agents, one or more anti-settling agents, one or more flocculants, and/or one or more rheological property controller.

The total amount of other optional additives in the cementitious composition may, for example, be equal to or less than about 20 wt% based on the total dry weight of the cementitious composition. For example, the total amount of other optional additives may be equal to or less than about 15 wt% or equal to or less than about 12 wt% or equal to or less than about 10 wt% or equal to or less than about 8 wt% or equal to or less than about 7 wt% or equal to or less than about 6 wt% or equal to or less than about 5 wt%. For example, the total amount of other optional additives in the cementitious composition may be equal to or greater than about 0.5 wt% or equal to or greater than about 1 wt%. For example, the total amount of other optional additives in the cementitious composition may be from 0 wt% to about 20 wt% or from about 0.5 wt% to about 20 wt% or from about 1 wt% to about 15 wt% or from about 2 wt% to about 10 wt%.

The total amount of the one or more rheological property controllers may, for example, be equal to or less than about 5 wt% based on the total dry weight of the cementitious composition. For example, the total amount of the one or more rheological property controllers may be 0 wt%. For example, the total amount of the one or more rheological property controllers may be from about 0.5 wt% to about 5 wt% or from about 1 wt% to about 4 wt% based on the total dry weight of the cementitious composition.

### Exemplary Cementitious Compositions

The cementitious composition may, for example, comprise, based on the total dry weight of the cementation composition:
from about 1 wt% to about 10 wt% of calcium aluminate cement; and
from about 20 wt% to about 50 wt% of one or more other hydraulic binders.

The cementitious composition may, for example, comprise, based on the total dry weight of the cementation composition:
from about 1 wt% to about 10 wt% of calcium aluminate cement;
from about 20 wt% to about 50 wt% of one or more other hydraulic binders; and
from about 0.5 wt% to about 15 wt% of one or more reinforcing fibres.

The cementitious composition may, for example, comprise, based on the total dry weight of the cementation composition:
from about 1 wt% to about 10 wt% of calcium aluminate cement;
from about 20 wt% to about 50 wt% of one or more other hydraulic binders; and
from about 20 wt% to about 70 wt% of one or more granular materials.

The cementitious composition may, for example, comprise, based on the total dry weight of the cementation composition:
from about 1 wt% to about 10 wt% of calcium aluminate cement;
from about 20 wt% to about 40 wt% of one or more other hydraulic binders; and
from about 1 wt% to about 10 wt% of one or more reinforcing fibres.

The cementitious composition may, for example, comprise, based on the total dry weight of the cementation composition:
from about 1 wt% to about 10 wt% of calcium aluminate cement;
from about 20 wt% to about 40 wt% of one or more other hydraulic binders; and
from about 30 wt% to about 70 wt% of one or more granular materials.

The cementitious composition may, for example, comprise, based on the total dry weight of the cementation composition:
from about 1 wt% to about 10 wt% of calcium aluminate cement;
from about 25 wt% to about 35 wt% of one or more other hydraulic binders; and
from about 1 wt% to about 10 wt% of one or more reinforcing fibres.

The cementitious composition may, for example, comprise, based on the total dry weight of the cementation composition:
from about 1 wt% to about 10 wt% of calcium aluminate cement;
from about 25 wt% to about 35 wt% of one or more other hydraulic binders; and
from about 50 wt% to about 70 wt% of one or more granular materials.

The cementitious composition may, for example, comprise, based on the total dry weight of the cementation composition:
from about 1 wt% to about 6 wt% of calcium aluminate cement;
from about 25 wt% to about 35 wt% of one or more other hydraulic binders; and
from about 1 wt% to about 10 wt% of one or more reinforcing fibres.

The cementitious composition may, for example, comprise, based on the total dry weight of the cementation composition:
from about 1 wt% to about 6 wt% of calcium aluminate cement;
from about 25 wt% to about 35 wt% of one or more other hydraulic binders; and
from about 55 wt% to about 65 wt% of one or more granular materials.

The cementitious composition may, for example, comprise, based on the total dry weight of the cementation composition:
from about 1 wt% to about 10 wt% of calcium aluminate cement;
from about 25 wt% to about 35 wt% of one or more other hydraulic binders;
from about 50 wt% to about 70 wt% of one or more granular materials; and
from about 2 wt% to about 15 wt% of one or more reinforcing fibres.

The cementitious composition may, for example, comprise, based on the total dry weight of the cementation composition:
from about 1 wt% to about 6 wt% of calcium aluminate cement;
from about 25 wt% to about 35 wt% of one or more other hydraulic binders;
from about 55 wt% to about 65 wt% of one or more granular materials; and
from about 2 wt% to about 10 wt% of one or more reinforcing fibres.

### Method for Making the Cementitious Composition

The cementitious compositions described herein may be made by any suitable methods known to those skilled in the art. The methods may, for example, comprise measuring the desired amounts of each component and mixing the components together using any suitable mixing equipment. The components may be mixed in any order. The cement components (calcium aluminate cement and any other hydraulic binders) may, for example, be mixed into the cementitious composition after all the other components. The components may, for example, be mixed in dry form. Alternatively, some or all of the components may be in an aqueous solution or suspension. Water may be added to the mixture at any stage.

The cementitious composition may, for example, be a dry composition. Alternatively, the cementitious composition may be an aqueous slurry, for example having a solids content equal to or less than about 40 wt% solids, for example equal to or less than about 35 wt% solids or equal to or less than about 30 wt% solids, for example from about 10 wt% to 40 wt% solids.

### Autoclaved Cement Products and Method

The cementitious compositions described herein are suitable to be used to make an autoclaved cement product. As used herein, the term "autoclaved cement product" refers to a product formed when a cementitious composition has undergone autoclave treatment, which comprises heating to a temperature between 100°C and 372°C at a pressure higher than atmospheric pressure (higher than about 101.325 kPa).

The duration of the autoclave treatment may, for example, be from about 2 hours to about 2 days.

The cementitious composition may, for example, undergo curing before it is subjected to autoclave treatment. Curing may, for example, occur at a temperature ranging from about 18°C to about 30°C. Curing may, for example, occur for a period of time ranging from about 4 hours to about 96 hours, for example from about 8 hours to about 72 hours, for example from about 12 hours to about 60 hours, for example from about 12 hours to about 20 hours.

The autoclaved cement products may, for example, be a fibre cement board or an autoclaved aerated concrete (AAC).

A fibre cement board is a material formed from a combination of cement and reinforcing fibres. The fibre cement board may further comprise other materials such as granular materials.

Autoclaved aerated concrete is a type of precast concrete comprising cement, granular materials, and a blowing agent to produce air bubbles in the composition. Autoclaved aerated concrete may, for example, further comprise reinforcing fibres.

The autoclaved cement product may, for example, have a modulus of rapture (MOR) equal to or less than about 15 MPa. For example, the autoclaved cement product may have a MOR equal to or less than about 14 MPa or equal to or less than about 13 MPa or equal to or less than about 12 MPa or equal to or less than about 11 MPa or equal to or less than about 10 MPa or equal to or less than about 9 MPa or equal to or less than about 8 MPa. For example, the autoclaved cement product may have a MOR equal to or greater than about 2 MPa or equal to or greater than about 3 MPa or equal to or greater than about 4 MPa or equal to or greater than about 5 MPa. For example, the autoclaved cement product may have a MOR ranging from about 2 MPa to about 15 MPa or from about 4 MPa to about 12 MPa or from about 5 MPa to about 10 MPa.

The autoclaved cement product may, for example, have a modulus of elasticity (MOE) equal to or less than about 8500 MPa. For example, the autoclaved cement product may have a MOE equal to or less than about 8000 MPa or equal to or less than about 7500 MPa or equal to or less than about 7000 MPa or equal to or less than about 6500 MPa or equal to or less than about 6000 MPa or equal to or less than about 5500 MPa or equal to or less than about 5000 MPa or equal to or less than about 4500 MPa or equal to or less than about 4000 MPa. For example, the autoclaved cement product may have a MOE equal to or greater than about 1000 MPa or equal to or greater than about 1500 MPa or equal to or greater than about 2000 MPa or equal to or greater than about 2500 MPa. For example, the autoclaved cement product may have a MOE ranging from about 1000 MPa to about 8500 MPa or from about 2000 MPa to about 6000 MPa or from about 3000 MPa to about 5000 MPa.

The autoclaved cement product may, for example, have a toughness equal to or less than about 2000 J/m². For example, the autoclaved cement product may have a toughness equal to or less than about 1800 J/m² or equal to or less than about 1600 J/m² or equal to or less than about 1500 J/m² or equal to or less than about 1400 J/m² or equal to or less than about 1200 J/m². For example, the autoclaved cement product may have a toughness equal to or greater than about 500 J/m² or equal to or greater than about 600 J/m² or equal to or greater than about 800 J/m². For example, the autoclaved cement product may have a toughness ranging from about 500 J/m² to about 2000 J/m² or from about 600 J/m² to about 1800 J/m² or from about 800 J/m² to about 1600 J/m².

The mechanical properties of the autoclaved cement product may be measured in accordance with ASTM 1185 and 1186.

The autoclaved cement product may, for example, have a density ranging from about 1.0 g/cm³ to about 1.4 g/cm³, for example from about 1.1 g/cm³ to about 1.3 g/cm³.

The autoclaved cement product may, for example, have a water absorption capacity equal to or greater than about 20 %. For example, the autoclaved cement product may have a water absorption capacity equal to or greater than about 25 % or equal to or greater than about 30 % or equal to or greater than about 35 % or equal to or greater than about 40%. For example, the autoclaved cement product may have a water absorption capacity equal to or less than about 80 % or equal to or less than about 70 % or equal to or less than about 60 % or equal to or less than about 50 %. For example, the autoclaved cement product may have a water absorption capacity ranging from about 20 % to about 80 % or from about 30 % to about 60 % or from about 40 % to about 50 %.

Water absorption capacity of the autoclaved cement product may be measured by immersion in water after preliminary drying according to ASTM C1186.

The autoclaved cement product may, for example, have a length change equal to or less than about 0.2 %. For example, the autoclaved cement product may have a length change equal to or less than about 0.15 % or equal to or less than about 0.1 % or equal to or less than about 0.09 % or equal to or less than about 0.08 % or equal to or less than about 0.07 % or equal to or less than about 0.06 %. For example, the autoclaved cement product may have a length change equal to or greater than about 0.01 % or equal to or greater than about 0.02 %. For example, the autoclaved cement product may have a length change ranging from about 0.01 % to about 0.2 % or from about 0.02 % to about 0.1 %.

Length change of the autoclaved cement product may be measured by comparing wet and dry conditions such as by ASTM C1186.

The following numbered paragraphs define particular embodiments of the present invention:
1. A cementitious composition comprising, based on the total dry weight of the cementitious composition:
   from about 0.25 wt% to less than about 50 wt% of a calcium aluminate cement; and
   from about 20 wt% to about 60 wt% of one or more other hydraulic binders.
2. The cementitious composition of paragraph 1, further comprising from about 0 wt% to about 80 wt% of one or more granular materials based on the total dry weight of the cementitious composition.
3. The cementitious composition of paragraph 1 or 2, further comprising from about 0 wt% to about 15 wt% of one or more reinforcing fibres.
4. The cementitious composition of any preceding paragraph, wherein the cementitious composition further comprises one or more blowing agents, for example from about 0 wt% to about 2 wt% of one or more blowing agents.
5. The cementitious composition of any preceding paragraph, wherein the cementitious composition further comprises one or more tobermorite modifiers, for example from about 0 wt% to about 10 wt% of one or more tobermorite modifiers.
6. The cementitious composition of any preceding paragraph, wherein the cementitious composition comprises from about 0.25 wt% to about 20 wt% of a calcium aluminate cement.
7. The cementitious composition of paragraph 6, wherein the cementitious composition comprises from about 1 wt% to about 10 wt% of a calcium aluminate cement.
8. The cementitious composition of any of paragraphs 1 to 6, wherein the cementitious composition comprises from about 0.5 wt% to about 8 wt% of a calcium aluminate cement.
9. The cementitious composition of paragraph 8, wherein the cementitious composition comprises from about 2 wt% to about 5 wt% of a calcium aluminate cement.
10. The cementitious composition of any preceding paragraph, wherein the calcium aluminate cement comprises CA₂, wherein C is CaO and A is Al₂O₃.
11. The cementitious composition of any preceding paragraph, wherein the calcium aluminate cement comprises from about 40 wt% to about 70 wt% of CA₂, based on the total dry weight of the calcium aluminate cement.
12. The cementitious composition of any preceding paragraph, wherein the calcium aluminate cement comprises C₂AS, wherein C is CaO, A is Al₂O₃, and S is SiO₂.
13. The cementitious composition of any preceding paragraph, wherein the calcium aluminate cement comprises from about 0 wt% to about 45 wt% of C₂AS, based on the total dry weight of the calcium aluminate cement.
14. The cementitious composition of paragraph 13, wherein the calcium aluminate cement comprises from about 15 wt% to about 45 wt% of C₂AS, based on the total dry weight of the calcium aluminate cement.
15. The cementitious composition of any preceding paragraph, wherein the calcium aluminate cement comprises equal to or greater than about 80 wt% total CA₂ and C₂AS, based on the total dry weight of the calcium aluminate cement.
16. The cementitious composition of any preceding paragraph, wherein the calcium aluminate cement further comprises one or more of C, CA, CA₆, C₃A, C₄A₃$, C₁₂A₇, CAS₂, CS, C₂S, C₃S, C₃S₂, A₃S₂, C₄AF, and C₂A_{1-y}F_{y}, wherein C is CaO, A is Al₂O₃, S is SiO₂, $ is SO₃, F is Fe₂O₃, and y is 0 to 1, for example 0 to 0.7.
17. The cementitious composition of any preceding paragraph, wherein the calcium aluminate cement comprises from about 0.5 wt% to about 6 wt% of CA based on the total dry weight of the calcium aluminate cement.
18. The cementitious composition of any preceding paragraph, wherein the calcium aluminate cement comprises from about 0.25 wt% to about 15 wt% of CA₆ based on the total dry weight of the calcium aluminate cement.
19. The cementitious composition of any preceding paragraph, wherein the calcium aluminate cement comprises from about 5 wt% to about 20 wt% of C₄AF based on the total dry weight of the calcium aluminate cement.
20. The cementitious composition of any preceding paragraph, wherein the calcium aluminate cement comprises from about 0.5 wt% to about 20 wt% of C₄A₃$ based on the total dry weight of the calcium aluminate cement.
21. The cementitious composition of any preceding paragraph, wherein the total amount of C₁₂A7 and CA and C₄A₃$ is equal to or less than about 10 wt% based on the total dry weight of the calcium aluminate cement.
22. The cementitious composition of any preceding paragraph, wherein the total amount of C, C₃A, C₁₂A₇, CA and C₄A₃$ is equal to or less than about 10 wt% based on the total dry weight of the calcium aluminate cement.
23. The cementitious composition of any preceding paragraph, wherein the one or more other hydraulic binders is selected from Portland cement, fly ash, pozzolanic ash, blast furnace slag, silica flour, silica fume, metakaolin, lime (including, for example, slaked lime), basalt, or a combination thereof.
24. The cementitious composition of any preceding paragraph, wherein the cementitious composition comprises from about 20 wt% to about 60 wt% of one or more other hydraulic binders.
25. The cementitious composition of any preceding paragraph, wherein the cementitious composition comprises from about 20 wt% to about 40 wt% of one or more other hydraulic binders.
26. The cementitious composition of any preceding paragraph, wherein the granular materials are selected from quartz, sand, limestone, gypsum, siliceous sand, or a combination thereof.
27. The cementitious composition of any preceding paragraph, wherein the cementitious composition comprises from about 15 wt% to about 80 wt% of one or more granular materials.
28. The cementitious composition of any preceding paragraph, wherein the cementitious composition comprises from about 20 wt% to about 70 wt% or from about 20 wt% to about 50 wt% of one or more granular materials.
29. The cementitious composition of any preceding paragraph, wherein the one or more reinforcing fibres are selected from cellulose fibres, cellulose pulp, glass fibres, carbon fibres, polymeric fibres, and combinations thereof.
30. The cementitious composition of paragraph 29, wherein the polymeric fibers are selected from polyvinylacetate fibres, polyethylene fibres, polyvinylalcohol fibers, or a combination thereof.
31. The cementitious composition of any preceding paragraph, wherein the cementitious composition comprises from about 0 wt% to about 15 wt% of the one or more reinforcing fibres, for example from about 1 wt% to about 10 wt% of the one or more reinforcing fibres.
32. The cementitious composition of any preceding paragraph, wherein the one or more expansion agents is aluminium, for example aluminium powder.
33. The cementitious composition of any preceding paragraph, wherein the cementitious composition comprises from about 0 wt% to about 2 wt% of the one or more blowing agents.
34. The cementitious composition of any preceding paragraph, wherein the cementitious composition comprises from about 0 wt% to about 5 wt% of one or more rheology property controllers.
35. The cementitious composition of any preceding paragraph, wherein the tobermorite modifiers are selected from calcium sulphates and aluminium hydroxides.
36. A method for making an autoclaved cement product, the method comprising autoclaving the cementitious composition of any preceding paragraph.
37. The method of paragraph 36, wherein the method comprises curing the cementitious composition prior to autoclaving.
38. The method of paragraph 36 or 37, wherein the method comprises mixing the cementitious composition with water prior to autoclaving and/or prior to curing.
39. The method of any of paragraphs 36 to 38, wherein the autoclaved cement product is a fibre cement board or an autoclaved aerated concrete (AAC).
40. An autoclaved cement product obtained by and/or obtainable by the method of any of paragraphs 36 to 39.
41. Use of a calcium aluminate cement to make an autoclaved cement product.
42. The use of paragraph 41, wherein the autoclaved cement product is a fibre cement board or an autoclaved aerated concrete (AAC).
43. The use of paragraph 41 or 42, wherein the use increases the toughness and/or the dimensional stability and/or the carbonation resistance and/or water intake of the autoclaved cement product.
44. The use of any of paragraphs 41 to 43, wherein the cementitious composition of any of paragraphs 1 to 35 is used to make the autoclaved cement product.

### EXAMPLES

### Example 1

A number of cementitious compositions in accordance with the present invention were made and used to form cement sheets which were cured and autoclaved. A reference composition not comprising calcium aluminate cement was also used to form fibre cement sheets which were cured and autoclaved. The mechanical properties, water absorption and dimensional stability of the sheets was tested using the methods described herein.

The MOR of the sheets made in accordance with the present invention decreased compared to the MOR of the reference.

The MOE of the sheets made in accordance with the present invention was substantially the same or decreased compared to the MOE of the reference.

The toughness of the sheets made in accordance with the present invention was substantially the same or decreased compared to the toughness of the reference.

The water absorption of the sheets made in accordance with the present invention was substantially the same compared to the water absorption of the reference.

The % length change of the sheets made in accordance with the present invention was decreased compared to the % length change of the reference.

The foregoing broadly describes certain embodiments of the present invention without limitation. Variations and modifications as will be readily apparent to those skilled in the art are intended to be within the scope of the present invention as defined in and by the appended claims.

## Claims

1. A cementitious composition comprising, based on the total dry weight of the cementitious composition:
from about 0.25 wt% to less than about 50 wt% of a calcium aluminate cement, for example from about 0.25 wt% to about 10 wt% of a calcium aluminate cement; and
from about 20 wt% to about 60 wt% of one or more other hydraulic binders.

2. The cementitious composition of claim 1, wherein the cementitious composition further comprises:
from about 0 wt% to about 80 wt%, for example from about 15 wt% to about 80 wt%, of one or more granular materials; and/or
from about 0 wt% to about 15 wt%, for example from about 0.5 wt% to about 10 wt%, of one or more reinforcing fibres;
from about 0 wt% to about 2 wt%, for example from about 0.01 wt% to about 2 wt%, of one or more blowing agents; and/or
from about 0 wt% to about 10 wt%, for example from about 0.5 wt% to about 8 wt%, of one or more tobermorite modifiers.

3. The cementitious composition of claim 1 or 2, wherein the calcium aluminate cement comprises CA₂, wherein C is CaO and A is Al₂O₃, for example wherein the calcium aluminate cement comprises from about 40 wt% to about 70 wt% of CA₂ based on the total dry weight of the calcium aluminate cement.

4. The cementitious composition of any preceding claim, wherein the calcium aluminate cement comprises C₂AS, wherein C is CaO, A is Al₂O₃, and S is SiO₂, for example wherein the calcium aluminate cement comprises from about 15 wt% to about 45 wt% of C₂AS, based on the total dry weight of the calcium aluminate cement.

5. The cementitious composition of any preceding claim, wherein the calcium aluminate cement comprises equal to or greater than about 80 wt% total CA₂ and C₂AS, based on the total dry weight of the calcium aluminate cement.

6. The cementitious composition of any preceding claim, wherein the calcium aluminate cement further comprises one or more of C, CA, CA₆, C₃A, C₄A₃$, C₁₂A₇, CAS₂, CS, C₂S, C₃S, C₃S₂, A₃S₂, C₄AF, and C₂A_{1-y}F_{y}, wherein C is CaO, A is Al₂O₃, S is SiO₂, $ is SO₃, F is Fe₂O₃, and y is 0 to 1, for example 0 to 0.7.

7. The cementitious composition of any preceding claim, wherein the one or more other hydraulic binders is selected from Portland cement, fly ash, pozzolanic ash, blast furnace slag, silica flour, silica fume, metakaolin, lime (including, for example, slaked lime), basalt, or a combination thereof.

8. The cementitious composition of any of claims 2 to 7, wherein the granular materials are selected from quartz, sand, limestone, gypsum, siliceous sand, or a combination thereof.

9. The cementitious composition of any of claims 2 to 8, wherein the one or more reinforcing fibres are selected from cellulose fibres, cellulose pulp, glass fibres, carbon fibres, polymeric fibres, and combinations thereof.

10. The cementitious composition of any of claims 2 to 9, wherein the one or more blowing agents is aluminium, for example aluminium powder.

11. A method for making an autoclaved cement product, for example a fibre cement board or an autoclaved aerated concrete (AAC), the method comprising autoclaving the cementitious composition of any preceding claim.

12. The method of claim 11, wherein the method comprises curing the cementitious composition prior to autoclaving and/or wherein the method comprises mixing the cementitious composition with water prior to autoclaving and/or prior to curing.

13. An autoclaved cement product, for example a fibre cement board or an autoclaved aerated concrete (AAC), obtained by and/or obtainable by the method of claim 11 or 12.

14. Use of a calcium aluminate cement to make an autoclaved cement product, for example a fibre cement board or an autoclaved aerated concrete (AAC).

15. The use of claim 14, wherein the cementitious composition of any of claims 1 to 10 is used to make the autoclaved cement product.
